# EUROPEAN PATENT SPECIFICATION

(11) **EP 4 008 751 B1**
(45) Date of publication and mention of the grant of the patent: **06.09.2023**
(21) Application number: 20211298.3
(22) Date of filing: 02.12.2020
(51) Int. Cl.: C08L 79/08, C08L 81/06, G02B 1/04, C08L 67/02, C08L 69/00, C08L 71/02, C08K 3/22

(54) **COMPOSITION, METHOD FOR THE MANUFACTURE THEREOF, AND ARTICLES PREPARED THEREFROM**
ZUSAMMENSETZUNG, VERFAHREN ZUR HERSTELLUNG DAVON UND DARAUS HERGESTELLTE ARTIKEL
COMPOSITION, SON PROCÉDÉ DE FABRICATION ET ARTICLES PRÉPARÉS À PARTIR DE LA COMPOSITION

(43) Date of publication of application: 08.06.2022
(73) Proprietor: SHPP Global Technologies B.V., 4612 PX Bergen op Zoom (NL)
(72) Inventor: WANG, Zheng, Shanghai, 201319 (CN); RAMALINGAM, Hariharan, 562125 Karnataka (IN); HOOGLAND, Gabrie, 4612 PX Bergen op Zoom (NL); JIANG, Siguang, Shanghai, 201319 (CN); SHEN, Liang, Shanghai, 201319 (CN)
(74) Representative: Balder IP Law, S.L.

(56) References cited:
- EP-A1- 3 530 700
- US-A1- 2005 048 299
- US-A1- 2012 029 125
- US-B2- 8 263 691
- US-B2- 10 676 571

## Description

### BACKGROUND

Thermoplastic polymers, including polyetherimides and poly(arylene ether sulfone)s, are useful in the manufacture of articles and components for a wide range of applications, from automotive parts to electronic appliances. Because of beneficial properties such as transparency and impact resistance, polyetherimides and poly(arylene ether sulfone)s have also been used in optical applications including as sensor lenses, optical interconnectors, transceivers, light guides, camera lenses, eyeglass and safety glass lenses, illumination lenses such as light fixtures, flashlight and lantern lenses, and motor vehicle headlight lenses and covers. Since many optical articles are used in a high-temperature environment or have to be processed under harsh conditions, it is desirable for the materials to have the ability to withstand elevated temperatures without deformation or discoloration, and the ability to maintain good optical properties even when processed using conventional molding processes. To date, many optical lenses are made from glass as polymer materials were not able to provide the necessary dimensional stability, particular for use in single mode fiber optic connectors. US8263691B2 discloses a composition comprising a miscible polymer blend of: a) a resin selected from the group consisting of resorcinol based polyester carbonates, resorcinol based polyarylates and mixtures thereof, b) at least one alkyl amide compound with a molecular weight from 250 to 1000 and c) one or more polyetherimide resins, wherein said polyester carbonates and polyarylates have at least 50 mole % aryl ester linkages derived from resorcinol, and wherein the miscible polymer blend has a percent transmission, as measured at 3.2 mm, using ASTM method D1003, of greater than or equal to 50%;wherein the refractive index, as measured by ASTM method D542, is from about 1.580 to about 1.680.

Therefore, there is a continuing need in the art for an improved composition that is particularly well suited for optical applications. It would be particularly advantageous to provide a composition having a low coefficient of thermal expansion and high infrared transmission, while also maintaining other good physical properties, such as tensile properties, flexural properties, and impact strength

### SUMMARY

A composition comprises 20 weight percent to 75 weight percent of a polyetherimide or a poly(arylene ether sulfone); 5 weight percent to 35 weight percent of a second polymer comprising a polycarbonate-ester copolymer or a polyester; and 20 weight percent to 60 weight percent of boehmite, preferably wherein the boehmite has an average particle diameter of less than 1 micrometer, as determined using laser light scattering; wherein weight percent is based on the total weight of the composition.

A method of manufacturing the composition comprises melt-mixing the components of the composition, and optionally, extruding the composition.

An article comprising the composition is also disclosed.

The above described and other features are exemplified by the following detailed description.

### DETAILED DESCRIPTION

The present inventors have unexpectedly discovered that compositions including a polyetherimide or a poly(arylene ether sulfone), a second polymer comprising a polycarbonate-ester copolymer or a polyester, and a particular inorganic filler can provide a desirable combination of properties. In particular, boehmite in particular amounts, can provide molded compositions exhibiting low coefficients of thermal expansion (CTE), high infrared (IR) transmission, and good processability. Without wishing to be bound by theory, it is believed that addition of the second polymer can facilitate tuning the refractive index of the composition as well as imparting improved flowability for easier processing. The compositions described herein can therefore be particularly well suited for a variety of articles, specifically articles for optical applications.

A composition is an aspect of the present disclosure. The composition comprises a polyetherimide or a poly(arylene ether sulfone).

In an aspect, the composition comprises the polyetherimide. Polyetherimides comprise more than 1, for example 2 to 1000, or 5 to 500, or 10 to 100 structural units of formula (1) 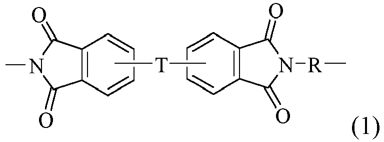 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In an aspect R is divalent group of one or more of the following formulas (2) 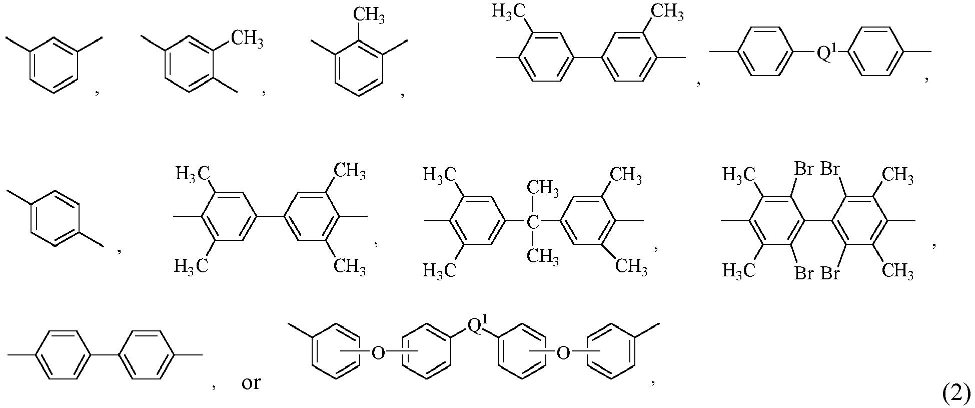 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an aspect R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In an aspect, at least 10 mole percent or at least 50 mole percent of the R groups contain sulfone groups, and in other aspects no R groups contain sulfone groups.

Further in formula (1), T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (3) 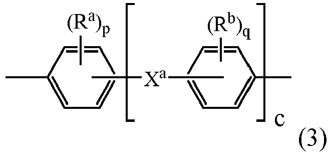 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) 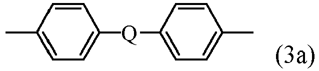 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In an aspect Z is derived from bisphenol A, such that Q in formula (3a) is 2,2-isopropylidene.

In an aspect in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O- wherein Z is a divalent group of formula (3a) and Q is 2,2-isopropylidene. Such materials are available under the trade name ULTEM from SABIC. Alternatively, the polyetherimide can be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety, an example of which is commercially available under the trade name EXTEM from SABIC.

In an aspect, the polyetherimide is a copolymer that optionally comprises additional structural imide units that are not polyetherimide units, for example imide units of formula (4) 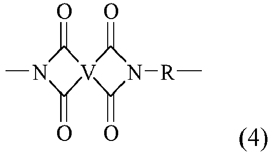 wherein R is as described in formula (1) and each V is the same or different, and is a substituted or unsubstituted C₆₋₂₀ aromatic hydrocarbon group, for example a tetravalent linker of the formulas 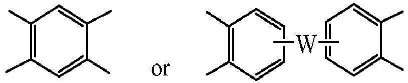 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 mol% to 10 mol% of the total number of units, or 0 mol% to 5 mol% of the total number of units, or 0 mol% to 2 mole % of the total number of units. In an aspect, no additional imide units are present in the polyetherimide.

The polyetherimide can be prepared by any of the methods known to those skilled in the art, including the reaction of an aromatic bis(ether anhydride) of formula (5) or a chemical equivalent thereof, with an organic diamine of formula (6)

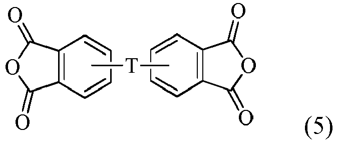

H₂N-R-NH₂ (6)

wherein T and R are defined as described above. Copolymers of the polyetherimides can be manufactured using a combination of an aromatic bis(ether anhydride) of formula (5) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In an aspect the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing. In an aspect, the organic diamine is m-phenylenediamine, p-phenylenediamine, or a combination thereof, preferably m-phenylene.

The polyetherimide can have a melt index of 0.1 grams per minute (g/min) to 10 g/min, as measured by American Society for Testing Materials (ASTM) D1238 at 340 °C to 370 °C, using a 6.7 kilogram (kg) weight. In an aspect, the polyetherimide has a weight average molecular weight (Mw) of 1,000 to 150,000 grams/mole (g/mol or Daltons (Da)), as measured by gel permeation chromatography, using polystyrene standards. In an aspect the polyetherimide has an Mw of 10,000 to 80,000 g/mol. Such polyetherimides typically have an intrinsic viscosity greater than 0.2 deciliters per gram (dl/g), or, more specifically, 0.35 dl/g to 0.7 dl/g as measured in m-cresol at 25 °C.

In an aspect, the composition comprises the poly(arylene ether sulfone). As used herein, the term "poly(arylene ether sulfone)" can refer to polymers having repeat units of formula (7)

-Ar¹-SO₂-Ar²-O- (7)

wherein each Ar¹ and Ar² is the same or different, and is a group of formula (8) 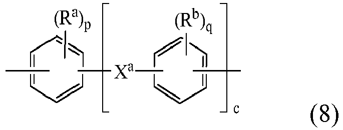 wherein c is 0 or 1, R^{a} and R^{b} are each independently a linear or branched C₁₋₁₀ alkyl, linear or branched C₂₋₁₀ alkenyl, linear or branched C₂₋₁₀ alkynyl, C₆₋₁₈ aryl, C₇₋₂₀ alkylaryl, C₇₋₂₀ arylalkyl, C₅₋₁₀ cycloalkyl, C₅₋₂₀ cycloalkenyl, linear or branched C1-10 alkylcarbonyl, C₆₋₁₈ arylcarbonyl, halogen, nitro, cyano, a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (8), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an aspect, the bridging group X^{a} is single bond, - O-, -S-, -S(O)-, -S(O)₂-, -C(O)-, or a C₁₋₁₈ organic group. The Ci-is organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the Ci-is organic bridging group. In an aspect, c is 0 or 1, p and q is each 0, and X^{a} is isopropylidene.

Specific poly(arylene ether sulfone)s that can be used include polyethersulfone (also known as "PES" or "PESU"), which contains at least 85 weight percent of units of formula (8a) 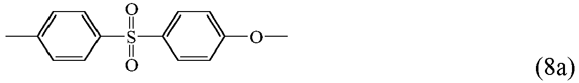 or polyphenylene sulfone (also known as "PPSU" or polyphenylsulfone), which contains at least 85 weight percent of units of formula (8b) 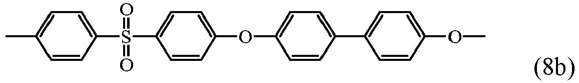 or polyetherethersulfone, which contains at least 85 weight percent of units of formula (8c) 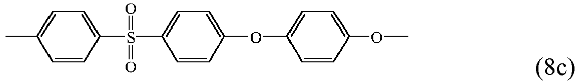 or polysulfone (often referred to as "PSU"), which contains at least 85 weight percent of units of formula (8d) 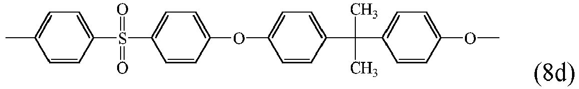 or a combination comprising at least one of the foregoing poly(arylene ether sulfone)s. Copolymers comprising a combination of at least two types of units of formulas (8a), (8b), (8c), and (8d) can also be used.

The poly(arylene ether sulfone)s can be linear or branched, having 1 or more, 2 or more, or 5 or more branching points per 1,000 carbon atoms along the polymer chain. In an aspect, the poly(arylene ether sulfone)s are linear, having 10 or fewer, 5 or fewer, 2 or fewer, or 1 or fewer branching points per 1,000 carbon atoms along the polymer chain. In an aspect, the poly(arylene ether sulfone)s have a glass transition temperature (Tg) of greater than 175 °C, specifically from 200 °C to 280 °C, and more specifically from 255 °C to 275 °C. The poly(arylene ether sulfone)s can further have a weight average molecular weight (Mw) of 500 g/mol to 100,000 g/mol, specifically 1,000 to g/mol 75,000 g/mol, more specifically 1,500 g/mol to 50,000 g/mol, and still more specifically 2,000 g/mol to 25,000 g/mol.

Exemplary poly(arylene ether sulfone)s that can be used include those that are available from sources such as Solvay Specialty Polymers, Quadrant EPP, Centroplast Centro, Duneon, GEHR Plastics, Westlake Plastics, Gharda Chemicals, Sumitomo Chemial, and UJU New Materials Co., Ltd.. Commercial grades of poly(phenylsulfone)s include those with the trade names RADEL^{™}, UDEL^{™}, ULTRASON^{™}, GAFONE^{™}, and PARYLS^{™}. Poly(arylene ether sulfone)s are commercially available from Solvay Advanced Polymers K.K. under the trademark of VERADEL^{™}, from BASF Corporation under the trademark of ULTRASON^{™}, and from Sumitomo Chemical Co., Ltd. under the trademark of SUMIKAEXCEL^{™}.

Polyphenylene sulfones are commercially available, including the polycondensation product of biphenol with dichloro diphenyl sulfone. Methods for the preparation of polyphenylene sulfones are widely known and several suitable processes have been well described in the art. Two methods, the carbonate method and the alkali metal hydroxide method, are known to the skilled artisan. In the alkali metal hydroxide method, a double alkali metal salt of a dihydric phenol is contacted with a dihalobenzenoid compound in the presence of a dipolar, aprotic solvent under substantially anhydrous conditions. The carbonate method, in which a dihydric phenol and a dihalobenzenoid compound are heated, for example, with sodium carbonate or bicarbonate and a second alkali metal carbonate or bicarbonate is also disclosed in the art, for example in U.S. Pat. No. 4, 176,222. Alternatively, the polyphenylene sulfone can be prepared by any of the variety of methods known in the art.

The molecular weight of the polyphenylene sulfone, as indicated by reduced viscosity data in an appropriate solvent such as methylene chloride, chloroform, N-methylpyrrolidone, or the like, can be greater than or equal to 0.3 dl/g, or, more specifically, greater than or equal to 0.4 dl/g and, typically, will not exceed 1.5 dl/g.

The polyphenylene sulfone weight average molecular weight (Mw) can be 10,000 g/mol to 100,000 g/mol as determined by gel permeation chromatography using ASTM D5296 with polystyrene standards. In an aspect the polyphenylene sulfone weight average molecular weight can be 10,000 g/mol to 80,000 g/mol. Polyphenylene sulfones can have glass transition temperatures (Tg) of 180 °C to 250 °C, as determined using differential scanning calorimetry (DSC).

In an aspect, the polyetherimide, poly(arylene ether sulfone), or combination thereof can have a transmission of greater than 70% from 850 nm to 1100 nm and from 1200 nm to 1330 nm, determined using a one-millimeter color chip by UV/Vis spectroscopy operating in transmission mode over a wavelength range of 400 nanometers to 2000 nanometers with a 4 nanometer interval. As used herein, "color chip" refers to a flat plaque having a thickness of 1 millimeter.

The polyetherimide or the poly(arylene ether sulfone) can be present in the composition in an amount of 20 weight percent to 75 weight percent, based on the total weight of the composition. Within this range, the polyetherimide or the poly(arylene ether sulfone) can be present in an amount of 20 weight percent to 70 weight percent, or 20 weight percent to 65 weight percent, or 20 weight percent to 60 weight percent, 25 weight percent to 50 weight percent, or 30 weight percent to 55 weight percent, or 35 weight percent to 50 weight percent, or 40 weight percent to 55 weight percent.

In addition to the polyetherimide or the poly(arylene ether sulfone), the composition further comprises a second polymer. The second polymer is different from the polyetherimide and the poly(arylene ether sulfone) and comprises a polycarbonate-ester copolymer or a polyester.

In an aspect, the polycarbonate-ester is present in the composition. Polycarbonate-esters (also known as poly(ester-carbonates) or polyester-polycarbonates) include recurring carbonate repeating units of formula (7) 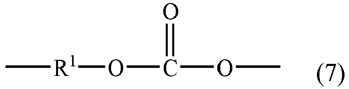 wherein at least 60 percent of the total number of R¹ groups are aromatic, or each R¹ contains at least one C₆₋₃₀ aromatic group. Preferably, each R¹ can be derived from a dihydroxy compound such as an aromatic dihydroxy compound of formula (8) or a bisphenol of formula (9). 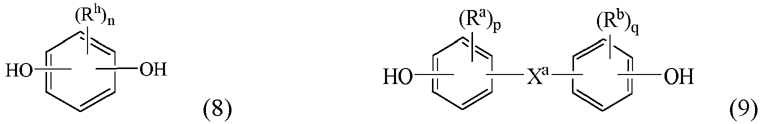 In formula (8), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (9), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an aspect, p and q is each 0, or p and q is each 1, and R^{a} and R^{b} are each a C₁₋₃ alkyl group, preferably methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1 -dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

In addition to repeating carbonate units, the polycarbonate-ester further includes repeating ester units of formula (10) 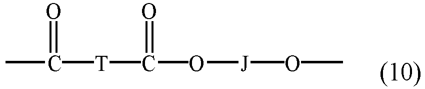 wherein J is a divalent group derived from a dihydroxy compound (which includes a reactive derivative thereof), and can be, for example, a C₁₋₁₀ alkylene, a C₆₋₂₀ cycloalkylene, a C₅₋₂₀ arylene, or a polyoxyalkylene group in which the alkylene groups contain 2 to 6 carbon atoms, preferably, 2, 3, or 4 carbon atoms; and T is a divalent group derived from a dicarboxylic acid (which includes a reactive derivative thereof), and can be, for example, a C₁₋₂₀ alkylene, a C₅₋₂₀ cycloalkylene, or a C₆₋₂₀ arylene. Copolyesters containing a combination of different T or J groups can be used. The polyester units can be branched or linear.

Specific dihydroxy compounds include aromatic dihydroxy compounds of formula (8) (e.g., resorcinol), bisphenols of formula (9) (e.g., bisphenol A), a C₁₋₈ aliphatic diol such as ethane diol, n-propane diol, i-propane diol, 1,4-butane diol, 1,4-cyclohexane diol, 1,4-hydroxymethylcyclohexane, or a combination thereof dihydroxy compounds. Aliphatic dicarboxylic acids that can be used include C₅₋₂₀ aliphatic dicarboxylic acids (which includes the terminal carboxyl groups), preferably linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,4-cyclohexane dicarboxylic acid, or a combination thereof acids. A combination of isophthalic acid and terephthalic acid wherein the weight ratio of isophthalic acid to terephthalic acid is 91:9 to 2:98 can be used.

Specific ester units include ethylene terephthalate units, n-proplyene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example from 1:99 to 99: 1, or from 10:90 to 90: 10, or from 20:80 to 80:20, or from 1:99 to 50:50, or from 50:50 to 99:1.

In an aspect, the polyester can be present in the composition. Useful polyesters include, for example, polyesters having repeating units of formula (10), which include poly(alkylene dicarboxylates), liquid crystalline polyesters, and polyester copolymers.

The polyesters can be obtained by processes which are generally known, including interfacial polymerization, melt-process condensation, solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Poly(alkylene arylates) can have a polyester structure according to formula (10), wherein T comprises groups derived from aromatic dicarboxylates, cycloaliphatic dicarboxylic acids, or derivatives thereof. Examples of preferably useful T groups include 1,2-, 1,3-, and 1,4-phenylene; 1,4- and 1,5- naphthylenes; cis- or trans-1,4-cyclohexylene; and the like. Preferably, where T is 1,4-phenylene, the poly(alkylene arylate) is a poly(alkylene terephthalate). In addition, for poly(alkylene arylate), preferably useful alkylene groups J include, for example, ethylene, 1,4-butylene, and bis-(alkylene-disubstituted cyclohexane) including cis- or trans-1,4-(cyclohexylene)dimethylene. Examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A preferably useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Preferably useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of formula (11) 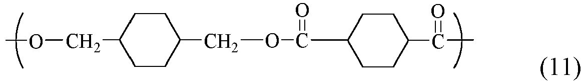 wherein, as described using formula (10), J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination thereof.

In an aspect, the polyester comprises poly(ethylene terephthalate), poly(butylene terephthalate), or a combination thereof.

The second polymer can be present in the composition in an amount of 5 to 35 weight percent, based on the total weight of the composition. Within this range, the second polymer can be present in an amount of 5 to 30 weight percent, or 10 to 35 weight percent, or 10 to 30 weight percent, or 10 to 25 weight percent, or 10 to 35 weight percent, or 5 to 25 weight percent. In an aspect, the second polymer is the polycarbonate-ester and can be present in an amount of 10 to 35 weight percent, or 10 to 30 weight percent. In an aspect, the second polymer is the polyester and can be present in an amount of 5 to 30 weight percent or 10 to 25 weight percent.

In addition to the polyetherimide or the poly(arylene ether sulfone) and the second polymer, the composition further comprises boehmite. The boehmite preferably has a refractive index of 1.60 to 1.68, or 1.60 to 1.67, or 1.60 to 1.66 as determined at a wavelength of 587 nanometers. The inorganic filler can have an average particle size of less than 1 micrometer, as determined by laser light scattering. In an aspect, the inorganic filler can have an average particle size (D50) that is less than 1 micrometer, for example 0.1 micrometer to 1 micrometer, or 0.1 micrometer to 0.8 micrometers, or 0.1 micrometer to 0.5 micrometers, or 0.1 micrometer to 0.45 micrometers, or 0.25 micrometers to 0.45 micrometers, preferably 0.30 to 0.40 micrometers, as determined using laser light scattering

In an aspect, the composition comprises, consists essentially of, or consists of the polyetherimide, the poly(arylene ether sulfone) or the combination thereof, the second polymer, and the boehmite. In an aspect, the composition can exclude any component other than the polyetherimide, the poly(arylene ether sulfone) or the combination thereof, the second polymer, and the boehmite that is not specifically described herein. In an aspect, the composition comprises less than 5 weight percent, or less than 1 weight percent (based on the total weight of the composition) of any thermoplastic polymer other than the polyetherimide, the poly(arylene ether sulfone), the polyestercarbonate, and the polyester. In an aspect the composition excludes any thermoplastic polymer other than the polyetherimide, the poly(arylene ether sulfone), the polyestercarbonate, and the polyester. The composition can optionally exclude any inorganic filler other than the boehmite.

In an aspect, the composition can optionally further comprise an additive composition, comprising one or more additives selected to achieve a desired property, with the proviso that the additive(s) are also selected so as to not significantly adversely affect a desired property of the composition. The additive composition or individual additives can be mixed at a suitable time during the mixing of the components for forming the composition. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styreneacrylonitrile copolymer (TSAN)), or a combination thereof. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 wt% to 10.0 wt%, or 0.01 wt% to 5 wt%, each based on the total weight of the composition.

In an aspect, the composition can further comprise an additive composition comprising an antioxidant, a thermal stabilizer, a hydrostabilizer, a UV stabilizer, a mold release agent, or a combination comprising at least one of the foregoing.

The composition can be manufactured by various methods generally known in the art. For example, the polyetherimide, poly(arylene ether sulfone), or combination thereof and the second polymer can be blended with the boehmite, for example in a high-speed mixer or by handmixing. The blend can be fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long (*i.e.*, 0.635 centimeters) or less as desired. Such pellets can be used for subsequent molding, shaping, or forming, for example, compression molding, injection molding, or the like.

Molded samples of the composition can exhibit one or more advantageous properties. For example, a molded sample of the composition can exhibit a transmission of greater than 75% in the range of 1270 nm to 1330 nm for a 1 mm thick sample, as determined by UV/Vis spectroscopy operating in transmission mode, over a wavelength range of 400 nanometers to 2000 nanometers with a 4 nanometer interval. A molded sample of the composition can exhibit a transmission of greater than 75% in the range of 1270 nm to 1330 nm for a 2 mm thick sample, as determined by UV/Vis spectroscopy operating in transmission mode, over a wavelength range of 400 nanometers to 2000 nanometers with a 4 nanometer interval . A molded sample of the composition can exhibit a flow coefficient of thermal expansion, a cross-flow coefficient of thermal expansion, or both of less than 5E-5 1/°C (*e.g*., 5 × 10⁻⁵ 1/°C) between -10 °C and 85 °C, as determined according to ASTM E831. In an aspect, the composition exhibits at least one of the foregoing properties, preferably at least two of the foregoing properties, more preferably each of the foregoing properties.

A molded sample of the composition can optionally further exhibit one or more of the following properties. For example, a molded sample of the composition can exhibit a heat deflection temperature (HDT) greater than 90 °C at 1.8MPa as determined by ASTM D648 at a thickness of 3.2 mm. A molded sample of the composition can exhibit a flexural modulus, determined according to ASTM D790, of greater than 3600 MPa, for example 4000 MPa to 7000 MPa. A molded sample of the composition can exhibit a tensile modulus, determined according to ASTM D638, of greater than 3700 MPa, for example 4000 MPa to 7500 MPa. In an aspect, the composition can exhibit at least one of the foregoing properties, or at least two of the foregoing properties, or at each of the foregoing properties.

In a specific aspect, the composition comprises 25 weight percent to 50 weight percent of the polyetherimide; 10 weight percent to 35 weight percent of the second polymer, wherein the second polymer is a polycarbonate-ester; 35 weight percent to 45 weight percent of the boehmite; and 0 weight percent to 0.1 weight percent of an antioxidant.

In a specific aspect, the composition comprises 30 weight percent to 55 weight percent of the polyetherimide; 5 weight percent to 30 weight percent of the second polymer, wherein the second polymer is a poly(ethylene terephthalate); 35 weight percent to 45 weight percent of the boehmite; and 0 weight percent to 0.1 weight percent of an antioxidant.

In a specific aspect, the composition comprises 35 weight percent to 50 weight percent of the polyetherimide; 10 weight percent to 25 weight percent of the second polymer, wherein the second polymer is a poly(butylene terephthalate); 35 weight percent to 45 weight percent of the boehmite; and 0 weight percent to 0.1 weight percent of an antioxidant.

In a specific aspect, the composition comprises 40 weight percent to 55 weight percent of the poly(arylene ether sulfone); 10 weight percent to 35 weight percent of the second polymer, wherein the second polymer is a polycarbonate-ester; 25 to 35 weight percent of the boehmite; and 0 weight percent to 0.1 weight percent of an antioxidant.

Articles comprising the composition represent another aspect of the present disclosure. Articles can be prepared, for example, by molding, extruding, or shaping the above-described composition into an article. The composition can be molded into useful shaped articles by a variety of methods, such as injection molding, extrusion, rotational molding, blow molding and thermoforming. Exemplary articles can be in the form of a fiber, a film, a sheet, a pipe, or a molded part. The physical properties of the composition described herein can provide articles that are particularly well-suited for transparent articles, for example for use in optical applications. Such articles can include optical articles, preferably an optic lens, a lens array, transparent materials applications in medical devices, electronic and telecommunications, building and constructions, sensors, antennas, electrodes, thin film optics, thin film substrates, transistors and IR transparent display devices. In an aspect, the article can be a lens for a single mode optical fiber connector.

This disclosure is further illustrated by the following examples, which are nonlimiting.

### EXAMPLES

The materials used for the following examples are described in Table 1.

**Table 1**

| Component | Description | Supplier |
|---|---|---|
| PEI-1 | Polyetherimide comprising repeating units derived from 2,2-bis[4-(3,4-dicarboxyphenoxy)phenyl] propane dianhydride with metaphenylene diamine, having a weight average molecular weight of 45,000 grams per mole, as determined by gel permeation chromatography relative to polystyrene standards | SABIC |
| PPSU | Polyphenylene sulfone resin (CAS Reg. No. 31833-61-1); obtained as PARYLS F1350 | UJU |
| PES | Polyether sulfone (CAS Reg. No. 25667-42-9); obtained as SUMIKAEXCEL 3600G | SUMITOMO Chemical |
| PCE | (Isophthalic acid-terephthalic acid-resorcinol) - Bisphenol A copolyestercarbonate made with interfacial polymerization, with an ester content 83 mol%, Mw around 21,000 g/mol and a polydispersity index around 2.5 as determined by gel permeation chromoatography using bisphenol A polycarbonate standards, para-cumyl phenol end-capped, obtained as ITR9010 | SABIC |
| PET | Polyethylene terephthalate) (CAS Reg. No. 25038-59-9) having an intrinsic viscosity of 0.565 deciliter per gram measured by Ubbelohde viscometer at 25 °C in a 1:1 weight/weight mixture of phenol and 1,1,2,2 tetrachloroethane; obtained as FC-03-56 | FOSU |
| PBT | Poly(1,4-butylene terephthalate), CAS Reg. No. 26062-94-2, having an intrinsic viscosity of 1.23-1.30 deciliters/gram and a carboxylic acid (COOH) end group content of 33-40 milliequivalents COOH per kilogram resin; obtained as CPP PBT 1100X | Changchun Plastic |
| AlO(OH) | Aluminium oxide hydroxide having an average particle size (D50) 0.35 µm, obtained as ACTILOX 200AS1 | Nabaltec |
| TBPP | Tris(2,4-di-tert-butylphenyl) phosphite, CAS Reg. No. 31570-04-4; obtained as IRGAFOS 168 | BASF Corp. |

Compositions were prepared by compounding the components of the composition using a 26 mm Coperion W&P twin screw extruder. The compounded compositions were pelletized and dried for further molding. The compounding profile is shown in Table 2.

**Table 2**

| Parameters | Unit | Set Values |
|---|---|---|
| Zone 1 Temp | °C | 50 |
| Zone 2 Temp | °C | 150 |
| Zone 3 Temp | °C | 300 |
| Zone 4 Temp | °C | 320 |
| Zone 5 Temp | °C | 320 |
| Zone 6 Temp | °C | 320 |
| Zone 7 Temp | °C | 320 |
| Zone 8 Temp | °C | 320 |
| Zone 9 Temp | °C | 320 |
| Zone 10 Temp | °C | 320 |
| Zone 11 Temp | °C | 320 |
| Die Temp | °C | 330 |
| Screw speed | rpm | 400 |
| Throughput | kg/hr | 30 |

Dried pellets were then molded into testing bars using a Fanuc S-2000i injection molding machine according to the injection molding profile shown in Table 3.

**Table 3**

| Parameters | Unit | Set Values |
|---|---|---|
| Cnd: Pre-drying time | Hour | 4 |
| Cnd: Pre-drying temp | °C | 120 |
| Hopper temp | °C | 70 |
| Zone 1 temp | °C | 300 |
| Zone 2 temp | °C | 320 |
| Zone 3 temp | °C | 320 |
| Nozzle temp | °C | 320 |
| Mold temp | °C | 120 |
| Screw speed | rpm | 100 |
| Back pressure | kgf/cm² | 70 |
| Decompression | mm | 3 |
| Injection time | s | 0.66 |
| Holding time | s | 8 |
| Cooling time | s | 15 |
| Shot volume | mm | 38 |
| Switch point | mm | 10 |
| Injection speed | mm/s | 50 |
| Holding pressure | kgf/cm² | 750 |
| Cushion | mm | 4.3 |

Physical testing of the compositions was carried out according to the following test standards. Heat deflection temperature (HDT) was determined according to ASTM D648 using a testing stress of 1.82 MPa and a sample thickness of 3.2 mm. Tensile properties were determined in accordance with ASTM D638 using a test speed of 5 mm/min. Flexural properties were determined in accordance with ASTM D790 using a test speed of 1.27 mm/min. Notched (NII) and Unnotched (UNII) Izod impact strength was determined in accordance with ASTM D256 using a pendulum energy of 5 lbf/ft. Infrared (IR) transmission was determined using UV/Vis analysis of a 1 mm or 2 mm color chip by UV-Vis spectrophotometer Perkin Elmer Lambda 750S spectrometer with a slit width of 2 nanometers, and an integrated sphere with 10 centimeter diameter. The flow and cross-flow coefficient of thermal expansion (CTE) measurement was carried out according to ASTM E831 and in the range of -10 °C to 85 °C using a DuPont 2940 probe, which provided 0.3 N tension force on the sample, at a heating rate of 58 °C per minute. Glass transition temperature (Tg) was determined by differential scanning calorimetry (DSC), at a heating rate of 20 °C per minute from 25 °C to 300°C.

Compositions and the corresponding physical properties are shown in Table 4.

**Table 4**

| Component | Units | E1^{∗} | E2^{∗} | E3^{∗} | E4 | E5 | E6 | E7 | E8 | E9 | E10 | E11 | E12 | E13 | E14 |
|---|---|---|---|---|---|---|---|---|---|---|---|---|---|---|---|
| PEI-1 | wt% | 100 | | | 47.94 | 41.94 | 35.94 | 29.94 | 54 | 48 | 42 | 48 | 36 | | |
| PPSU | wt% | | 100 | | | | | | | | | | | 48.944 | |
| PES | wt% | | | 100 | | | | | | | | | | | 48.94 |
| PCE | wt% | | | | 12 | 18 | 24 | 30 | | | | | | 21 | 21 |
| PET | wt% | | | | | | | | 6 | 12 | 18 | | | | |
| PBT | wt% | | | | | | | | | | | 12 | 24 | | |
| AlO(OH) | wt% | | | | 40 | 40 | 40 | 40 | 40 | 40 | 40 | 40 | 40 | 30 | 30 |
| TBPP | wt% | | | | 0.06 | 0.06 | 0.06 | 0.06 | | | | | | 0.06 | 0.06 |
| Properties | | | | | | | | | | | | | | | |
| Tg | °C | 217 | 221 | 227 | 204 | 196 | 183 | 177 | 189 | 172 | 157 | 158 | 130 | 175 | 207 |
| HDT | °C | 198 | 195 | 197 | 167 | 159 | 154 | 145 | 164 | 146 | 133 | 124 | 92.7 | 147 | 156 |
| Flex. Mod. | MPa | 3510 | 2240 | 2600 | 6500 | 6620 | 6320 | 6290 | 6390 | 6610 | 6620 | 6500 | 6050 | 4620 | 5020 |
| Tens. Mod. | MPa | 3580 | 2266 | 2630 | 6517 | 6532 | 6416 | 6177 | 6744 | 7040 | 6770 | 6695 | 6357 | 4453 | 4859 |
| Tens. Strength @brk | MPa | | | | 72 | 64 | 50 | 40 | 62 | 43 | 44 | 59 | 37 | 50 | 46 |
| Tens. Elong. @ brk | % | | | | 1.7 | 1.4 | 1.1 | 0.8 | 1.3 | 0.8 | 0.9 | 1.3 | 0.7 | 1.2 | 1 |
| NII | J/m | 32 | 670 | 80 | 22.6 | 20.1 | 19.9 | | 23.8 | | | 22.2 | 21.7 | 28.2 | |
| UNII | J/m | 1335 | | | 185 | 140 | 135 | 109 | 182 | 104 | 106 | 185 | 113 | 180 | 100 |
| CTE (flow) | 1/°C | 5.5E-5 | 6.6 E-5 | 6.5 E-5 | 3.55 E-5 | 3.6 E-5 | 3.8 E-5 | 3.9 E-5 | 3.53 E-5 | 3.59 E-5 | 3.47 E-5 | 3.8 E-5 | 4.7 E-5 | 4.34 E-5 | 4.5 E-5 |
| CTE (xflow) | 1/°C | | | | 3.8 E-5 | 3.9 E-5 | 4.1 E-5 | 4.3 E-5 | 3.73 E-5 | 3.84 E-5 | 3.92 E-5 | 4.14 E-5 | 4.84 E-5 | 4.6 E-5 | 4.9 E-5 |
| %T (1270nm; 1mm) | % | 89 | 88 | 89 | 84 | 86 | 86 | 86 | 84 | 83 | 87 | 81 | 84 | 85 | 83 |
| %T (1270nm; 2mm) | % | 89 | 88 | 89 | 79 | 83 | 72 | 71 | 77 | 78 | 82 | 70 | 78 | 82 | 73 |
| %T (1290nm; 1mm) | % | 89 | 88 | 89 | 84 | 86 | 86 | 86 | 83 | 84 | 87 | 80 | 84 | 85 | 83 |
| %T (1290nm; 2mm) | % | 88 | 88 | 88 | 79 | 83 | 72 | 71 | 77 | 78 | 82 | 70 | 78 | 82 | 73 |
| %T (1310nm; 1mm) | % | 88 | 88 | 89 | 84 | 86 | 86 | 86 | 83 | 83 | 86 | 81 | 84 | 85 | 83 |
| %T (1310nm; 2mm) | % | 88 | 88 | 88 | 78 | 82 | 72 | 71 | 77 | 78 | 81 | 70 | 78 | 82 | 73 |
| %T (1330nm; 1mm) | % | 88 | 88 | 89 | 84 | 86 | 86 | 85 | 83 | 83 | 86 | 80 | 84 | 84 | 82 |
| %T (1330nm; 2mm) | % | 87 | 87 | 87 | 78 | 82 | 71 | 71 | 77 | 78 | 81 | 70 | 78 | 81 | 72 |

| | | | | | | | | | | | | | | | |
|---|---|---|---|---|---|---|---|---|---|---|---|---|---|---|---|
| *denotes a Comparative Example | | | | | | | | | | | | | | | |

Comparative example 1 shows the physical properties of PEI alone. As can be seen from Table 4, this PEI exhibits a high IR transmission but lower dimensional stability. The IR transmittance for PEI is 87% to 89%, and the flow CTE is 5.5 E-5 1/°C. Comparative example 2 shows the physical properties of PPSU alone. As can be seen from Table 4, this PPSU exhibits a high IR transmission but lower dimensional stability. The IR transmittance for PPSU is 87% to 89%, and the flow CTE is 6.6 E-5 1/°C. Comparative example 3 shows the physical properties of PES alone. As can be seen from Table 4, this PES exhibits a high IR transmission but lower dimensional stability. The IR transmittance for PES is 87 % to 89 %, and the flow CTE is 6.5 E-5 1/°C.

Examples 4-7 are PEI compositions including PCE and boehmite. As can be seen in Table 4, addition of 40 wt% of boehmite and PCE in varying amounts provided compositions with reduced CTE and high IR transmission.

Examples 8-12 are PEI compositions including polyester and boehmite. Similar to the results obtained when a PCE was included in the composition, the compositions of examples 6-10 provided a reduced CTE and high IR transmittance.

Examples 13 and 14 are poly(arylene ether sulfone) compositions including PCE and boehmite. As can be seen in Table 4, addition of 30 wt% of boehmite and PCE in varying amounts provided compositions with reduced CTE and high IR transmission.

Aspect 3: The composition of aspect 1 or 2, wherein the composition exhibits a

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (*i.e.,* alkyl-O-), for example methoxy, ethoxy, and sec-butyloxy groups. "Alkylene" means a straight or branched chain, saturated, divalent aliphatic hydrocarbon group (*e.g*., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (*e.g.*, benzyl). The prefix "halo" means a group or compound including one more of a fluoro, chloro, bromo, or iodo substituent. A combination of different halo atoms (*e.g.*, bromo and fluoro), or only chloro atoms can be present. The prefix "hetero" means that the compound or group includes at least one ring member that is a heteroatom (*e.g*., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A composition comprising
20 weight percent to 75 weight percent of a polyetherimide or a poly(arylene ether sulfone);
5 weight percent to 35 weight percent of a second polymer comprising a polycarbonate-ester copolymer or a polyester; and
20 weight percent to 60 weight percent of boehmite, preferably wherein the boehmite has an average particle diameter of less than 1 micrometer, as determined using laser light scattering;
wherein weight percent is based on the total weight of the composition.

2. The composition of claim 1, wherein a molded sample of the composition exhibits:
a transmission of greater than 75% in the range of 1270-1330 nanometers for a 1 mm thick sample, as determined by UV/Vis spectroscopy at a sample thickness of 1 mm;
a transmission of greater than 65% in the range of 1270-1330 nanometers for a 1 mm thick sample, as determined by UV/Vis spectroscopy at a sample thickness of 2 mm; and
a flow coefficient of thermal expansion, a cross-flow coefficient of thermal expansion, or both of less than 5E-5 1/°C between -10 and 85°C, as determined according to ASTM E831.

3. The composition of claim 1 or 2, wherein the composition exhibits a heat deflection temperature of greater than 90 °C at 1.8 MPa as determined by ASTM D648 at a thickness of 3.2 mm.

4. The composition of any of claims 1 to 3, wherein the composition comprises the polyetherimide.

5. The composition of any of claims 1 to 3, wherein the composition comprises the poly(arylene ether sulfone), preferably wherein the poly(arylene ether sulfone) comprises a polyether sulfone, a polyphenylsulfone, or a combination thereof.

6. The composition of any of claims 1 to 5, wherein the second polymer is a polycarbonate-ester, preferably an (isophthalate/terephthalate-resorcinol)-carbonate copolymer.

7. The composition of any of claims 1 to 5, wherein the second polymer is a polyester comprising poly(ethylene terephthalate) or poly(butylene terephthalate).

8. The composition of any of claims 1 to 7, further comprising an additive composition comprising an antioxidant, a thermal stabilizer, a hydrostabilizer, a UV stabilizer, a mold release agent, or a combination comprising at least one of the foregoing

9. The composition of claim 1, comprising
25 weight percent to 50 weight percent of the polyetherimide;
10 weight percent to 35 weight percent of the second polymer, wherein the second polymer is a polycarbonate-ester;
35 weight percent to 45 weight percent of the boehmite; and
0 weight percent to 0.1 weight percent of an antioxidant.

10. The composition of claim 1, comprising
30 weight percent to 55 weight percent of the polyetherimide;
5 weight percent to 30 weight percent of the second polymer, wherein the second polymer is a poly(ethylene terephthalate);
35 weight percent to 45 weight percent of the boehmite; and
0 weight percent to 0.1 weight percent of an antioxidant.

11. The composition of claim 1, comprising
35 weight percent to 50 weight percent of the polyetherimide;
10 weight percent to 25 weight percent of the second polymer, wherein the second polymer is a poly(butylene terephthalate);
35 weight percent to 45 weight percent of the boehmite; and
0 weight percent to 0.1 weight percent of an antioxidant.

12. The composition of claim 1, comprising
40 weight percent to 55 weight percent of the poly(arylene ether sulfone);
10 weight percent to 35 weight percent of the second polymer, wherein the second polymer is a polycarbonate-ester;
25 weight percent to 35 weight percent of the boehmite; and
0 weight percent to 0.1 weight percent of an antioxidant.

13. A method of manufacturing the composition of any of claims 1 to 12, the method comprising melt-mixing the components of the composition, and optionally, extruding the composition.

14. An article comprising the composition of any of claims 1 to 12.

15. The article of claim 14, wherein the article is an optical article, a lens array, transparent materials applications in medical devices, electronic and telecommunications, building and constructions, sensors, antennas, electrodes, thin film optics, thin film substrates, transistors and IR transparent display devices.

## Patentansprüche

1. Zusammensetzung umfassend 20 Gewichtsprozent bis 75 Gewichtsprozent eines Polyetherimids oder eines Polyarylethersulfons;
5 Gewichtsprozent bis 35 Gewichtsprozent eines zweiten Polymers, umfassend ein Polycarbonat-Ester-Copolymer oder ein Polyester; und
20 Gewichtsprozent bis 60 Gewichtsprozent eines Böhmits, wobei das Böhmit vorzugsweise einen durchschnittlichen Partikeldurchmesser von weniger als 1 Mikrometer aufweist, bestimmt durch Laserlichtstreuung;
wobei die Gewichtsprozent auf dem Gesamtgewicht der Zusammensetzung basieren.

2. Zusammensetzung nach Anspruch 1, wobei eine geformte Probe der Zusammensetzung Folgendes aufweist:
eine Durchlässigkeit von über 75% im Bereich von 1270-1330 Nanometern für eine Probe mit einer Dicke von 1 mm, bestimmt mittels UV/VIS-Spektroskopie bei einer Probendicke von 1 mm;
eine Durchlässigkeit von über 65% im Bereich von 1270-1330 Nanometern für eine Probe mit einer Dicke von 1 mm, bestimmt mittels UV/VIS-Spektroskopie bei einer Probendicke von 2 mm; und
einen Durchflusskoeffizienten der thermischen Ausdehnung, einen Querflusskoeffizienten der thermischen Ausdehnung oder beides von weniger als 5E-5 1/°C zwischen -10 und 85°C, bestimmt gemäß ASTM E831.

3. Zusammensetzung nach Anspruch 1 oder 2, wobei die Zusammensetzung eine Wärmeformbeständigkeitstemperatur von über 90°C bei 1,8 MPa aufweist, bestimmt gemäß ASTM D648 bei einer Dicke von 3,2 mm.

4. Zusammensetzung nach einem der Ansprüche 1 bis 3, wobei die Zusammensetzung das Polyetherimid umfasst.

5. Zusammensetzung nach einem der Ansprüche 1 bis 3, wobei die Zusammensetzung das Polyarylethersulfon umfasst, wobei das Polyarylethersulfon vorzugsweise ein Polyethersulfon, ein Polyphenylsulfon oder eine Kombination aus diesen umfasst.

6. Zusammensetzung nach einem der Ansprüche 1 bis 5, wobei das zweite Polymer ein Polycarbonat-Ester ist, vorzugsweise ein Polycarbonat-Isophthalsäule/Terephthalsäure-Resorcin-Copolymer.

7. Zusammensetzung nach einem der Ansprüche 1 bis 5, wobei das zweite Polymer ein Polyester ist, umfassend Polyethylenterephthalat oder Polybutylenterephthalat.

8. Zusammensetzung nach einem der Ansprüche 1 bis 7, ferner umfassend eine Additive enthaltende Zusammensetzung, umfassend ein Antioxidationsmittel, einen Wärmestabilisator, einen Hydrostabilisator, einen UV-Stabilisator, ein Formtrennmittel oder eine Kombination aus zumindest einem der vorgenannten Stoffe.

9. Zusammensetzung nach Anspruch 1, umfassend
25 Gewichtsprozent bis 50 Gewichtsprozent des Polyetherimids;
10 Gewichtsprozent bis 35 Gewichtsprozent des zweiten Polymers, wobei das zweite Polymer ein Polycarbonat-Ester ist;
35 Gewichtsprozent bis 45 Gewichtsprozent des Böhmits; und
0 Gewichtsprozent bis 0,1 Gewichtsprozent eines Antioxidationsmittels.

10. Zusammensetzung nach Anspruch 1, umfassend
30 Gewichtsprozent bis 55 Gewichtsprozent des Polyetherimids;
5 Gewichtsprozent bis 30 Gewichtsprozent des zweiten Polymers, wobei das zweite Polymer ein Polyethylenterephthalat ist;
35 Gewichtsprozent bis 45 Gewichtsprozent des Böhmits; und
0 Gewichtsprozent bis 0,1 Gewichtsprozent eines Antioxidationsmittels.

11. Zusammensetzung nach Anspruch 1, umfassend
35 Gewichtsprozent bis 50 Gewichtsprozent des Polyetherimids;
10 Gewichtsprozent bis 25 Gewichtsprozent des zweiten Polymers, wobei das zweite Polymer ein Polybutylenterephthalat ist;
35 Gewichtsprozent bis 45 Gewichtsprozent des Böhmits; und
0 Gewichtsprozent bis 0,1 Gewichtsprozent eines Antioxidationsmittels.

12. Zusammensetzung nach Anspruch 1, umfassend
40 Gewichtsprozent bis 55 Gewichtsprozent des Polyarylethersulfons;
10 Gewichtsprozent bis 35 Gewichtsprozent des zweiten Polymers, wobei das zweite Polymer ein Polycarbonat-Ester ist;
25 Gewichtsprozent bis 35 Gewichtsprozent des Böhmits; und
0 Gewichtsprozent bis 0,1 Gewichtsprozent eines Antioxidationsmittels.

13. Verfahren zur Herstellung der Zusammensetzung nach einem der Ansprüche 1 bis 12, wobei das Verfahren das Schmelzmischen der Komponenten der Zusammensetzung sowie optional das Extrudieren der Zusammensetzung umfasst.

14. Gegenstand umfassend die Zusammensetzung nach einem der Ansprüche 1 bis 12.

15. Gegenstand nach Anspruch 14, wobei es sich bei dem Gegenstand um einen optischen Gegenstand, ein Linsenarray, transparente Materialien zur Anwendung in medizinischen Geräten, der Elektronik und der Telekommunikation, im Bauwesen, in Sensoren, Antennen, Elektroden, in der Dünnschichtoptik, für Dünnschichtsubstrate, Transistoren und IRdurchlässige Anzeigegeräte handelt.

## Revendications

1. Composition comprenant
20 % en poids à 75 % en poids d'un polyéther-imide ou d'une poly(arylène-éthersulfone) ;
5 % en poids à 35 % en poids d'un deuxième polymère comprenant un copolymère polycarbonate-ester ou un polyester ; et
20 % en poids à 60 % en poids de boehmite, de préférence dans laquelle la boehmite a une granulométrie moyenne inférieure à 1 micromètre, telle que déterminée par utilisation d'une diffusion de lumière laser ;
dans laquelle les pourcentages en poids sont basés sur le poids total de la composition.

2. Composition selon la revendication 1, dans laquelle un échantillon moulé de la composition présente :
une transmission supérieure à 75 % dans la plage de 1270 à 1330 nanomètres pour un échantillon ayant une épaisseur de 1 mm, telle que déterminée par spectroscopie UV/visible pour une épaisseur d'échantillon de 1 mm ;
une transmission supérieure à 65 % dans la plage de 1270 à 1330 nanomètres pour un échantillon ayant une épaisseur de 1 mm, telle que déterminée par spectroscopie UV/visible pour une épaisseur d'échantillon de 2 mm ; et
un coefficient de dilatation thermique en écoulement, un coefficient de dilatation thermique en flux transversal, ou les deux, inférieurs à 5E-5 1/°C entre -10 et 85°C, tels que déterminés conformément à ASTM E831.

3. Composition selon la revendication 1 ou 2, laquelle composition présente une température de fléchissement sous charge supérieure à 90 °C sous 1,8 MPa, telle que déterminée par ASTM D648 pour une épaisseur de 3,2 mm.

4. Composition selon l'une quelconque des revendications 1 à 3, laquelle composition comprend le polyéther-imide.

5. Composition selon l'une quelconque des revendications 1 à 3, laquelle composition comprend la poly(arylène-éthersulfone), de préférence dans laquelle la poly(arylène-éthersulfone) comprend une polyéthersulfone, une polyphénylsulfone, ou une combinaison de celles-ci.

6. Composition selon l'une quelconque des revendications 1 à 5, dans laquelle le deuxième polymère est un polycarbonate-ester, de préférence un copolymère (isophtalate/téréphtalate-résorcinol)-carbonate.

7. Composition selon l'une quelconque des revendications 1 à 5, dans laquelle le deuxième polymère est un polyester comprenant du poly(téréphtalate d'éthylène) ou du poly(téréphtalate de butylène).

8. Composition selon l'une quelconque des revendications 1 à 7, comprenant en outre une composition d'additif comprenant un antioxydant, un stabilisant thermique, un hydro-stabilisant, un stabilisant UV, un agent de démoulage, ou une combinaison comprenant au moins l'un des précédents.

9. Composition selon la revendication 1, comprenant
25 % en poids à 50 % en poids du polyéther-imide ;
10 % en poids à 35 % en poids du deuxième polymère, dans laquelle le deuxième polymère est un polycarbonate-ester ;
35 % en poids à 45 % en poids de la boehmite ; et
0 % en poids à 0,1 % en poids d'un antioxydant.

10. Composition selon la revendication 1, comprenant
30 % en poids à 55 % en poids du polyéther-imide ;
5 % en poids à 30 % en poids du deuxième polymère, dans laquelle le deuxième polymère est un poly(téréphtalate d'éthylène) ;
35 % en poids à 45 % en poids de la boehmite ; et
0 % en poids à 0,1 % en poids d'un antioxydant.

11. Composition selon la revendication 1, comprenant
35 % en poids à 50 % en poids du polyéther-imide ;
10 % en poids à 25 % en poids du deuxième polymère, dans laquelle le deuxième polymère est un poly(téréphtalate de butylène) ;
35 % en poids à 45 % en poids de la boehmite ; et
0 % en poids à 0,1 % en poids d'un antioxydant.

12. Composition selon la revendication 1, comprenant
40 % en poids à 55 % en poids de la poly(arylène-éthersulfone) ;
10 % en poids à 35 % en poids du deuxième polymère, dans laquelle le deuxième polymère est un polycarbonate-ester;
25 % en poids à 35 % en poids de la boehmite ; et
0 % en poids à 0,1 % en poids d'un antioxydant.

13. Méthode de fabrication de la composition selon l'une quelconque des revendications 1 à 12, la méthode comprenant le mélange à l'état fondu des composants de la composition, et éventuellement l'extrusion de la composition.

14. Article comprenant la composition selon l'une quelconque des revendications 1 à 12.

15. Article selon la revendication 14, lequel article est un article optique, un réseau de lentilles, des applications de matériaux transparents dans des dispositifs médicaux, l'électronique et les télécommunications, le bâtiment et les constructions, les capteurs, les antennes, les électrodes, les couches minces optiques, les substrats pour couche mince, les transistors, et les dispositifs d'affichage transparents aux IR.
